Europäisches Patentamt

European Patent Office

Office européen des brevets

(11) Numéro de publication: **0 267 893**
A2

## (12) DEMANDE DE BREVET EUROPEEN

(21) Numéro de dépôt: 87870158.0

(22) Date de dépôt: 12.11.87

(51) Int. Cl.⁴: **B 60 R 22/32**

(30) Priorité: 13.11.86 BE 217402

(43) Date de publication de la demande:
18.05.88 Bulletin 88/20

(84) Etats contractants désignés:
AT CH DE ES FR GB GR IT LI LU NL SE

(71) Demandeur: NOVITEC sc
Rue Murillo 19
B-1040 BRUXELLES (BE)

(72) Inventeur: Husson, Roger
Avenue de Levis Mirepoix 71
B-1090 Bruxelles (BE)

(74) Mandataire: Vigneron, Jean
Cabinet VIGNERON 30 avenue Eugène Godaux
B-1150 Bruxelles (BE)

(54) **Dispositif pour sectionner automatiquement une ceinture de sécurité à l'expiration d'un délai déterminé après une mise sous tension déterminée de la ceinture.**

(57) Dispositif 1 destiné soit à rendre pratiquement nulle la résistance à la traction d'une ceinture 3 ou de chaque brin d'un harnais de sécurité associé à un siège de véhicule, soit à sectionner cette ceinture 3 automatiquement, d'une part, lorsque celle-ci a subi une tension déterminée et, d'autre part, après un laps de temps déterminé qui suit cette mise sous tension de la ceinture, ce dispositif étant agencé dans un boîtier 2, fixe ou libre, dans lequel passe librement la ceinture 3 ou un brin du harnais.

Fig.3.

EP 0 267 893 A2

## Description

Dispositif pour sectionner automatiquement une ceinture de sécurité à l'expiration d'un délai déterminé après une mise sous tension déterminée de la ceinture.

La présente invention a pour objet un dispositif destiné soit à rendre pratiquement nulle la résistance à la traction d'une ceinture ou de chaque brin d'un harnais de sécurité associé à un siège de véhicule, soit à sectionner cette ceinture automatiquement, d'une part, lorsque ladite ceinture a subi une tension déterminée et, d'autre part, après un laps de temps déterminé qui suit cette mise sous tension.

Les avantages procurés par les ceintures de sécurité sont bien connus ainsi que les inconvénients qu'elles présentent en cas d'accident lorsqu'elles immobilisent les usages conscients ou non dans le véhicule.

L'invention a pour but de procurer un dispositif qui présente l'avantage de libérer automatiquement l'usager, c'est-à-dire sans aucune intervention de celui-ci ou d'un tiers, de sa ceinture de sécurité lorsque celle-ci a été soumise à une tension déterminée lors d'un accident. La destruction de la ceinture, en cas d'accident grave, n'est pas un inconvénient du fait qu'il est également bien connu qu'une ceinture de sécurité qui a été soumise à une forte tension est inutilisable.

A cet effet, suivant l'invention, le dispositif comprend un boîtier, fixe ou libre, dans lequel passe librement la ceinture de sécurité ou un brin du harnais et, disposés dans ce boîtier, des moyens sur lesquels prend appui la ceinture et qui sont agencés, d'une part, pour rester immobiles tant que la tension de la ceinture n'atteint pas la valeur déterminée susdite et, d'autre part, se déplacer lorsque cette valeur est atteinte, des moyens de percussion agencés pour être libérés par le déplacement des moyens susdits sur lesquels s'appuie la ceinture, une charge pyrotechnique dont la mise à feu est déclenchée par les moyens de percussion précités lorsque ceux-ci sont libérés, un couteau dont le tranchant s'étend transversalement à l'axe longitudinal de la ceinture et qui est guidé dans le boîtier pour occuper deux positions extrêmes, une première position inactive dans laquelle le tranchant du couteau est situé à l'écart de la ceinture et une seconde position active dans laquelle le tranchant est en contact avec la ceinture pour l'entamer ou la sectionner, des moyens, fusibles ou destructibles par la chaleur et dont la durée de destruction correspond au laps de temps précité, coopérant avec le couteau et la charge pyrotechnique pour immobiliser ce dernier dans sa première position extreme tant que la mise à feu de ladite charge n'est pas déclenchée et pour permettre audit couteau d'occuper automatiquement sa seconde position extrême, après la mise à feu de la charge, sous l'action de moyens agencés, dans le boîtier, pour exercer une pression sur le couteau en direction de la ceinture le boîtier etant en outre agencé pour offrir une surface d'appui à la ceinture lorsque le tranchant du couteau entre en contact avec cette dernière quand il approche de sa seconde position extrême.

Suivant une forme de réalisation de l'invention, les moyens précités, sur lesquels prennent appui la ceinture, sont agencés de manière à permettre leur adaptation à la valeur déterminée de la tension de la ceinture qui est nécessaire pour les déplacer afin de libérer les moyens de percussion susdits.

Suivant un mode de réalisation avantageux de l'invention, la charge pyrotechnique susdite est agencée dans le boîtier susdit de manière amovible pour permettre le choix d'une charge parfaitement adaptée aux moyens fusibles précités qui coopèrent avec ladite charge et le couteau.

Suivant une forme de réalisation avantageuse de l'invention, les moyens fusibles précités sont agencés dans le boîtier de manière amovible pour permettre le choix de moyens fusibles correspondant au temps de retard choisi, après la mise sous tension précitée de la ceinture, pour que le couteau passe de sa première position inactive à sa seconde position active.

Suivant un mode de réalisation particulièrement avantageux de l'invention, les moyens précités agencés dans le boîtier pour exercer une pression sur le couteau en direction de la ceinture sont réglables pour adapter cette pression à la résistance de la ceinture au cisaillement.

D'autres détails et particularités de l'invention ressortiront de la description des dessins annexés au présent mémoire et qui illustrent, à titre d'exemple non limitatif, une forme de réalisation particulière du dispositif suivant l'invention.

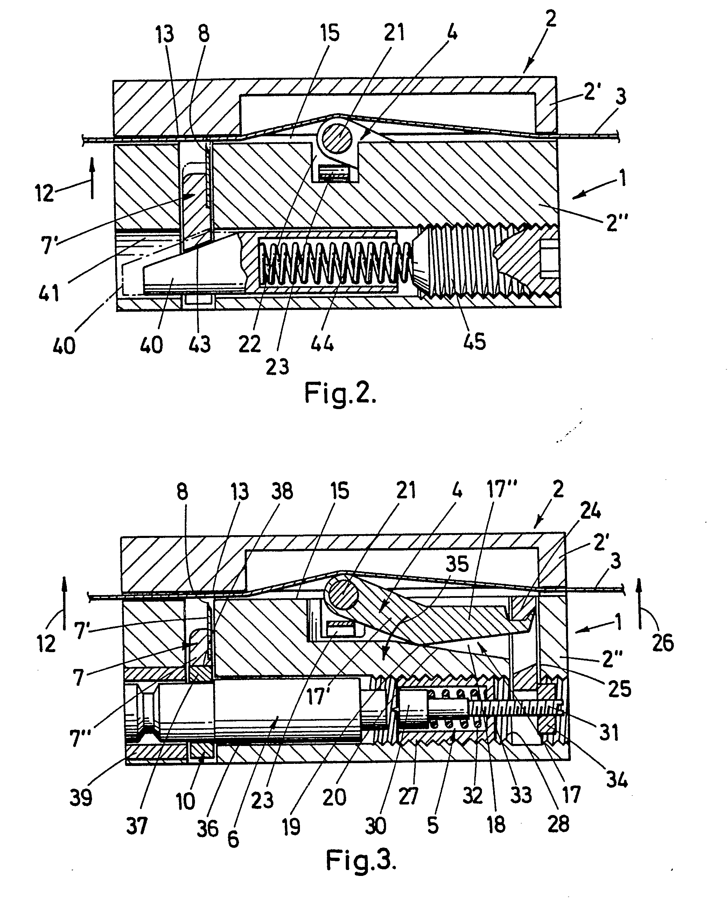

La figure 1 est une vue explosée, en perspective et avec brisures partielles, montrant les éléments constitutifs du dispositif suivant l'invention.

Les figures 2 et 3 sont des vues en élévation et en coupe, suivant les lignes II-II et III-III de la figure 1, montrant le dispositif en état de fonctionnement et avec les divers éléments représentés dans la position qu'ils occupent lorsque le couteau est en position inactive, le couteau et les moyens exerçant une pression sur ce dernier étant en outre représentés partiellement, en traits mixtes et à la figure 2, dans la position active dudit couteau.

Dans les différentes figures, les mêmes notations de référence désignent des éléments identiques.

Le dispositif 1 suivant l'invention et illustré aux dessins comprend un boîtier 2, fixe ou libre, dans lequel passe librement la ceinture de sécurité 3 et, disposés dans ce boîtier 2, des moyens 4 sur lesquels prend appui la ceinture 3 et qui sont agencés, d'une part, pour être immobilisés lorsque la tension régnant dans la ceinture 3, suivant son axe longitudinal, n'atteint pas une valeur déterminée et, d'autre part, se déplacer quand ladite valeur déterminée est atteinte. Dans ce boîtier 2 des moyens de percussion 5 sont également agencés de telle sorte que ceux-ci sont libérés par le déplacement des moyens 4, une charge pyrotechnique 6 dont la mise a feu est déclenchée par les moyens de percussion 5 quand ces derniers sont libérés, un couteau 7, constitué d'un couteau proprement dit 7' et d'un porte couteau 7", dont le tranchant 8 s'étend transversalement à l'axe longitudinal de la ceinture 3 et qui est guidé, dans une rainure 9 du boîtier, pour occuper deux positions extrêmes, une première position inactive (représentée et traits pleins aux figures 2 et 3) dans laquelle le tranchant 8 du couteau est situé à l'écart de la ceinture 3 et une seconde position active (représentée en traits interrompus à la figure 2) dans laquelle le tranchant 8 du couteau est en contact avec la ceinture 3 pour au moins l'entamer fortement pour réduire notablement sa résistance et de préférence la sectionner. Le dispositif 1 comprend encore des moyens 10 fusibles, dont la durée de destruction correspond au laps de temps susdit, qui coopèrent avec le porte-couteau 7" et la charge pyrotechnique 6 pour, d'une part, immobiliser ledit porte-couteau dans sa première position extrême inactive tant que la mise à feu de la charge 6 n'est pas déclenchée par les moyens de percussion 5, et, d'autre part, libérer le couteau 7 et permettre à celui-ci d'occuper automatiquement sa seconde position extrême active, après la mise a feu de la charge 6 par les moyens de percussion 5, sous l'action de moyens 11 agencés dans le boîtier 2 pour exercer une pression sur le couteau, suivant la flèche 12 (figures 2 et 3) en direction de la ceinture, le boîtier 2 étant agencé pour offrir une surface d'appui 13 à la ceinture 3, en regard du tranchant 8 du couteau 7, pour maintenir celle-ci lorsque le tranchant du couteau entre en contact avec ladite ceinture quand le couteau approche de sa seconde position extrême.

Dans la forme de réalisation du dispositif 1 illustrée aux dessins, le boîtier 2 est réalisé en deux pièces 2' et 2" superposables réunies entre elles par des vis 14 et entre lesquelles est ménagé un conduit dans lequel la ceinture 3 est guidée latéralement, en 16, de manière à pouvoir se déplacer librement suivant une direction parallèle à son axe longitudinal. Tous les moyens et éléments précités du dispositif 1 sont agencés, comme décrit ci-après, de manière amovible pour permettre l'entretien, ainsi que les réglages, dans divers logements ménagés dans la pièce 2" du boîtier.

Les moyens 4 sur lesquels prend appui la ceinture 3 comprennent un levier coudé 17 (figures 1 et 3) logé dans un évidement 18 réalisé dans la pièce 2" du boîtier 2, suivant l'axe longitudinal du conduit 15, afin que ses deux branches 17' et 17" soient dirigées vers ledit conduit 15 et que le levier puisse osciller autour d'une arête 19 reposant sur le fond 20 de l'évidement 18. L'extrémité libre de la branche 17' du levier est munie d'une tige rigide 21, qui s'étend perpendiculairement au levier et à l'axe longitudinal du conduit 15 et dont la longueur est inférieure à la dimension correspondante dudit conduit. Cette tige 21 sur laquelle s'appuie la ceinture 3 fait, en fonction de la position du levier 17 dont le mouvement est commandé, via la tige 21, par la tension régnant dans la ceinture, soit saillie dans le conduit 15 (cette position correspondant à la première position inactive du couteau 7), soit est logée dans un évidement correspondant 22 réalisé dans la pièce 2" (cette position correspondant à la seconde position active du couteau 7). Un ressort taré 23 est disposé dans l'évidement 22 et est agencé pour supporter la branche 17' du levier coudé et par conséquent la tige 21 et empêcher tout mouvement de ceux-ci tant que la pression déterminée précitée, exercée sur la ceinture lors d'un choc violent, n'est pas atteinte. L'extrémité libre de la branche 17" du levier 17 supporte une pièce de maintien 24 des moyens de percussion 5, logée dans un évidement 25 de la pièce 2" dans lequel cette pièce 23 peut se déplacer librement, suivant la flèche 26 (figure 3),et agencée pour rendre les moyens de percussion inopérants tant que le levier 17 est maintenu immobile par le ressort taré 23. Ce ressort 23 peut finalement être dégagé de l'évidement 22, par enlèvement du levier 17 simplement posé dans son évidement 18, pour éventuellement être remplacé par un autre ressort 23 en fonction de la valeur souhaitée de la tension de la ceinture, valeur au-delà de laquelle le dispositif entre en action pour sectionner la ceinture.

Les moyens de percussion 5 précités comprennent une coupelle 27 filetée extérieurement et destinée à être vissée (figures 1 et 3) dans un trou taraudé 28 réalisé dans la pièce 2" du boîtier suivant un axe 29, un percuteur 30 dont la tige 31, qui est filetée, fait saillie par rapport à la coupelle 27, un ressort 32 entourant la tige 31 et prenant appui, d'une part, sur le percuteur 30 et, d'autre part, sur le fond 33 de la coupelle 27 et, enfin, un boulon 34 coopérant, à l'extérieur de ladite coupelle, avec la tige filetée 31. La pièce 24 faisant partie des moyens 4, qui est destinée à maintenir les moyens de percussion 5 inactifs et disposée dans l'évidement 25 qui communique avec le trou taraudé 28, est placée entre la coupelle 27 et le boulon 34. Dès que le levier 17 bascule, suivant la flèche 35 (figure 3), la pièce 24 libère le boulon 34 et le percuteur 30 est projeté par le ressort 32 sur la charge pyrotechnique 6 en vue de sa mise à feu. Le déplacement du boulon 34 sur la tige filetée 31 permet de régler la tension du ressort 32 afin de régler la force de percussion du percuteur 30.

La charge 6 est avantageusement logée de manière amovible dans un évidement 36 situé dans le prolongement du trou taraudé 28 et est pourvue des moyens 10 susdits constitués par une bague 37, en métal fusible, amovible qui entoure ladite charge et qui est logée dans une ouverture 38 du porte-couteau 7" de telle sorte que cette bague 37 immobilise, tant qu'elle n'est pas fondue, le couteau 7 dans sa première posi tion extrême inactive. Le fait que la charge 6 et la bague 37 sont amovibles permet de les choisir en fonction du temps de retard souhaité entre le moment où la ceinture est mise violemment sous tension et le sectionnement de la ceinture. La bague 39 entourant la charge 6 contribue au maintien de cette dernière dans l'évidement 36.

Les moyens 11 précités exerçant une pression sur le couteau 7 suivant la flèche 12 comprennent deux éléments biseautés 40 disposés de manière à pouvoir coulisser librement, dans des trous 41 présentés par la pièce 2" de part et d'autre des moyens de percussion 5 et dont les axes 42 sont parallèles à l'axe 29. Le couteau 7 s'étend à travers ces trous 41 et présente, le long de son côté opposé à son tranchant 8, un plan incliné 43 coopérant avec le biseau des éléments 40. Chacun de ces derniers éléments est maintenu en contact avec le couteau par un ressort 44 immobilisé dans le trou 41 correspondant par un bouchon fileté 45 qu'il suffit de visser ou de dévisser dans lesdits trous pour régler la pression exercée par lesdits éléments 40, via les ressorts 44, sur le couteau 7.

Il doit être entendu que l'invention n'est nullement limitée à la forme de réalisation décrite et que bien des modifications peuvent être apportées à cette dernière sans sortir du cadre du présent brevet.

**Revendications**

1) Dispositif (1) destiné soit à rendre pratiquement nulle la résistance à la traction d'une ceinture (3) ou de chaque brin d'un harnais de sécurité associé à un siège de véhicule, soit à sectionner cette ceinture automatiquement, d'une part, lorsque ladite ceinture a subi une tension déterminée et, d'autre part, après un laps de temps déterminé qui suit cette mise sous tension, ledit dispositif étant caractérisé en ce qu'il comprend un boîtier (2) , fixe ou libre, dans lequel passe librement la ceinture de sécurité (3) ou un brin du harnais et, disposés dans ce boîtier, des moyens (4) sur lesquels prend appui la ceinture (3) et qui sont agencés, d'une part, pour rester immobiles tant que la tension de la ceinture n'atteint pas la valeur déterminée susdite et, d'autre part, se déplacer lorsque cette valeur est atteinte, des moyens de percussion (5) agencés pour être libérés par le déplacement des moyens susdits sur lesquels s'appuie la ceinture, une charge pyrotechnique (6) dont la mise à feu est déclenchée par les moyens de percussion (5) précités lorsque ceux-ci sont libérés, un couteau (7) dont le tranchant (8) s'étend transversalement à l'axe longitudinal de la ceinture (3) et qui est guidé dans le boîtier (2) pour occuper deux positions extrêmes, une première position inactive dans laquelle le tranchant (8) du couteau (7) est situé à l'écart de la ceinture (3) et une seconde position active dans laquelle le tranchant (8) est en contact avec la ceinture pour l'entamer ou la sectionner , des moyens (10), fusibles ou destructibles par la chaleur et dont la durée de destruction correspond au laps de temps précité, coopérant avec le couteau (7) et la charge pyrotechnique (6) pour immobiliser ce dernier dans sa première position extrême tant que la mise à feu de ladite charge (6) n'est pas déclenchée et pour permettre audit couteau (7) d'occuper automatiquement sa seconde position extrême, après la mise à feu de la charge (6) sous l'action de moyens (11) agencés, dans le boîtier (2), pour exercer une pression sur le couteau en direction de la ceinture, le boîtier étant en outre agencé pour offrir une surface d'appui (13) à la ceinture (3) lorsque le tranchant (8) du couteau (7) entre en contact avec cette dernière quand il approche de sa seconde position extrême.

2) Dispositif suivant la revendication 1, caractérisé en ce que les moyens (4) précités, sur lesquels prend appui la ceinture (3) sont agencés de manière à permettre leur adaptation à la valeur déterminée de la tension de la ceinture qui est nécessaire pour les déplacer afin de libérer les moyens de percussion (5) susdits.

3) Dispositif suivant l'une ou l'autre des revendications 1 et 2, caractérisé en ce que la charge pyrotechnique (6) susdite est agencée dans le boîtier (2) susdit de manière amovible pour permettre le choix d'une charge parfaitement adaptée aux moyens fusibles (10) précités qui coopèrent avec ladite charge (6) et le couteau (7).

4) Dispositif suivant l'une quelconque des revendications 1 à 3 , caractérisé en ce que les moyens fusibles (10) précités sont agencés dans le boîtier (2) de manière amovible pour permettre le choix de moyens fusibles correspondant au temps de retard choisi, après la mise sous tension précitée de la ceinture (3), pour que le couteau (7) passe de sa première position inactive à sa seconde position active.

5) Dispositif suivant l'une quelconque des revendications 1 à 4 , caractérisé en ce que les moyens (11) précités agencés dans le boîtier (2) pour exercer une pression sur le couteau (7) en direction de la ceinture (3) sont réglables pour adapter cette pression à la résistance de la ceinture au cisaillement.

6) Dispositif suivant l'une quelconque des revendications 1 à 5, caractérisé en ce que le boîtier (2) précité est réalisé en deux pièces ( 2', 2'') superposables réunies entre elles par des vis (14) et entre lesquelles est ménagé un conduit (15) dans lequel la ceinture (3) est guidée de manière à pouvoir se déplacer librement suivant une direction parallèle à son axe longitudinal, tous les moyens et éléments précités du dispositif (1) étant agencés, de manière amovible, dans des logements ménagés dans l'une des pièces du boîtier (2).

7) Dispositif suivant la revendication 6, caractérisé en ce que les moyens (4) susdits sur lesquels prend appui la ceinture (3) comprennent un levier coudé (17) logé dans un évidement (18) réalisé dans la pièce (2'') du boîtier (2) , suivant l'axe longitudinal du conduit (15) , de manière à ce que ses deux branches (17' et 17'') soient dirigées vers le conduit (15) et que le levier puisse osciller autour d'une arête (19) reposant sur le fond (2o) de l'évidement (18), l'extrémité libre d'une des branches (17') du levier (17) étant garnie d'une tige rigide (21) , perpendiculaire au levier (17) et à l'axe longitudinal du conduit (15), dont la longueur est inférieure à la dimension correspondante du conduit (15) , cette tige (21) sur laquelle s'appuie la ceinture (3) faisant soit saillie dans ce dernier, soit étant logée dans un évidement (22) correspondant réalisé dans la pièce (2″) précitee en fonction de la position du levier (17) dont le mouvement est commandé par la tension régnant dans la ceinture, un ressort taré (23) étant disposé dans l'évidement (22) prévu pour la tige (21) et agencé pour supporter le levier (17) et par conséquent la tige (21) sur laquelle repose la ceinture et empêcher tout mouvement de ceux-ci tant que la pression déterminée précitée exercée sur la ceinture n'est pas atteinte, l'extrémité libre de l'autre branche (17″) du levier (17) supportant une pièce de maintien (24) des moyens de percussion (5) susdits, logée dans un évidement (25) du boîtier (2) dans lequel elle peut se déplacer librement et agencée pour rendre ces moyens de percussion (5) inactifs tant que le levier (17) est maintenu immobile par le ressort taré (23).

8) Dispositif suivant la revendication 7, caractérisé en ce que les moyens de percussion (5) susdits sont constitués par une coupelle (27) filetée extérieurement et destinée à être vissée dans un trou taraudé (28) réalisé dans la pièce (2″) précitée du boîtier (2) suivant un axe (29) parallèle au conduit précité et situé dans un plan passant par l'axe longitudinal du conduit (15) et perpendiculaire à la tige rigide (21) susdite, par un percuteur (30) dont la tige (31), qui est filetée, fait saillie par rapport à la coupelle (27), par un ressort (32) entourant cette tige (31) et prenant appui sur le percuteur (30) et sur le fond (33) de la coupelle (27) et par un boulon (34) coopérant, à l'extérieur de la coupelle, avec la tige filetée (31) précitée, la pièce de maintien (24) des moyens de percussion (5) étant disposée, dans l'évidement (25) précité qui communique avec le trou taraudé (28) pour rendre ces moyens inactifs, entre la coupelle (27) et le boulon (34) , le déplacement de ce dernier sur la tige filetée (31) susdite permettant de règler la tension du ressort (32) , et, de là, la force de percussion du percuteur (30).

9) Dispositif suivant la revendication 8, caractérisé en ce que la charge pyrotechnique (6) est logée dans un évidement (36) situé dans le prolongement du trou taraudé (28) précité et comporte une bague (37), en métal fusible amovible, qui entoure la charge et qui est logée dans une ouverture (38) correspondante ménagée dans le couteau (7) de telle sorte que cette bague (37) immobilise, tant qu'elle n'est pas fondue, le couteau (7) dans sa première position inactive.

10) Dispositif suivant l'une ou l'autre des revendications 8 et 9 , caractérisé en ce que les moyens (11) précités destinés à exercer une pression sur le couteau(7) en direction de la ceinture (3) sont constitués par deux éléments biseautés (40) disposés, de manière à pouvoir y coulisser librement,dans des trous (41) réalisés dans la pièce (2″) précitée du boîtier (2), de part et d'autre des moyens de percussion (5), et dont les axes (42) sont parallèles à la tige (31) du percuteur (30) , le couteau (7) s'étendant à travers ces trous (41) et son côté opposé au tranchant (8) présentant un plan incliné (43) destiné à coopérer avec les éléments biseautés (40) précités, chacun de ces éléments étant maintenu en contact avec le couteau (7) par un ressort (44) immobilisé dans le trou (41) correspondant par un bouchon fileté (45) , la pression exercée par lesdits éléments sur le couteau (7) étant réglée en armant plus ou moins les ressorts (44) en vissant plus ou moins les bouchons filetés (45) dans lesdits trous.

0267893

Fig.2.

Fig.3.